(19) Europäisches Patentamt
European Patent Office
Office européen des brevets

(11) **EP 4 575 892 A1**

(12) **EUROPEAN PATENT APPLICATION**

(43) Date of publication:
**25.06.2025 Bulletin 2025/26**

(21) Application number: **24219892.7**

(22) Date of filing: **13.12.2024**

(51) International Patent Classification (IPC):
**G06N 3/008** (2023.01)    **B25J 11/00** (2006.01)

(52) Cooperative Patent Classification (CPC):
**G06N 3/008;** A63H 2200/00; G05B 2219/39162;
G05B 2219/40202; G05B 2219/40411;
G05B 2219/45007

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 JP 2023216539**

(71) Applicant: CASIO COMPUTER CO., LTD.
**Tokyo 151-8543 (JP)**

(72) Inventors:
• **Mayuzumi, Kouki**
 **Hamura-shi, Tokyo, 205-8555 (JP)**
• **Kawamura, Yoshihiro**
 **Hamura-shi, Tokyo, 205-8555 (JP)**
• **Ichikawa, Erina**
 **Hamura-shi, Tokyo, 205-8555 (JP)**
• **Yamada, Shunsuke**
 **Hamura-shi, Tokyo, 205-8555 (JP)**

(74) Representative: **Grünecker Patent- und
Rechtsanwälte
PartG mbB
Leopoldstraße 4
80802 München (DE)**

(54) **ROBOT CONTROL DEVICE, ROBOT, AND PROGRAM**

(57) A robot control device (10) controls a robot (1) including a sensor (50) that detects an action from outside and includes a processor (11). The processor (11) is configured to: cause the robot (1) to make motions in accordance with respective motion patterns (9) each of which is made up of a combination of motion elements (91, 92, 93, 94, 95, 96), in response to detecting the action from the outside with the sensor (50); derive respective evaluation values of the motion patterns (9); and generate a new motion pattern (9) by combining, based on the evaluation values, the motion elements (91, 92, 93, 94, 95, 96) of the motion patterns (9).

## FIG.1

EP 4 575 892 A1

1       **EP 4 575 892 A1**       2

## Description

TECHNICAL FIELD

The present disclosure relates to a robot control device, a robot, and a program.

DESCRIPTION OF RELATED ART

There has been known a technique of correcting motion data for a robot to make a motion on the basis of a personality parameter representing the robot's personality, thereby causing the robot to make its unique motion different from other robots, which is disclosed, for example, in JP 2014-69257 A.

SUMMARY OF THE INVENTION

However, with the above conventional technique, motions that a robot makes are fixed and unchanged. Therefore, if the above conventional technique is applied to a robot made to simulate a living creature, the robot repeats uniform motions and lacks lifelikeness.

Objects of the present disclosure include providing a robot that makes lifelike motions.

In order to achieve at least one of the aforementioned objects, according to an aspect of the present disclosure, there is provided a robot control device that controls a robot including a sensor that detects an action from outside, including a processor configured to:

cause the robot to make motions in accordance with respective motion patterns each of which is made up of a combination of motion elements, in response to detecting the action from the outside with the sensor;

derive respective evaluation values of the motion patterns, and

generate a new motion pattern by combining, based on the evaluation values, the motion elements of the motion patterns.

According to the present disclosure, a robot that makes lifelike motions can be provided.

BRIEF DESCRIPTION OF DRAWINGS

FIG. 1 illustrates the appearance of a robot.

FIG. 2 is a schematic view illustrating the configuration of a main part of the robot.

FIG. 3 is a block diagram illustrating a functional configuration of the robot.

FIG. 4 schematically illustrates transition of the operation state of the robot.

FIG. 5 illustrates a gesture pattern.

FIG. 6 illustrates the contents of motion elements.

FIG. 7 illustrates a gesture pattern group for the first period.

FIG. 8 illustrates an example of evaluation value data.

FIG. 9 is an illustration to explain a method for generating a gesture for the second period on the basis of gestures for the first period.

FIG. 10 illustrates a gesture pattern group for the second period.

FIG. 11 is an illustration to explain a mutation of a gesture.

FIG. 12 is a flowchart illustrating a control procedure for a gesture making process.

FIG. 13 is a flowchart illustrating a control procedure for a gesture learning process.

DETAILED DESCRIPTION

Hereinafter, one or more embodiments of the present disclosure will be described with reference to the drawings.

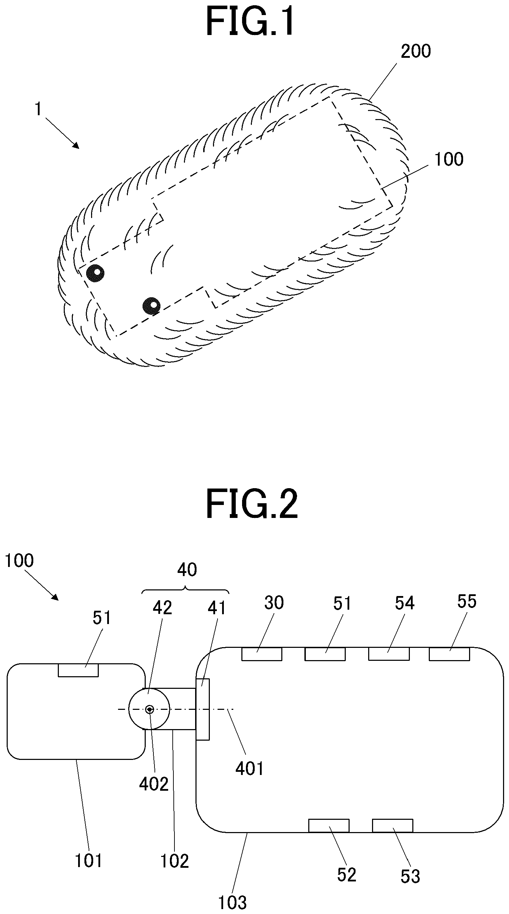

FIG. 1 illustrates the appearance of a robot 1. The robot 1 includes a main part 100 and an exterior 200 that covers the main part 100. The robot 1 is a pet robot made to simulate a small living creature. The robot 1 can make gestures (motions) different from one another. Examples of the gestures include a gesture of moving a head (and a neck) and a gesture of making a cry. The exterior 200 deforms as the main part 100 moves. The exterior 200 includes a fur made of pile fabric and decorative members resembling eyes.

FIG. 2 is a schematic view illustrating the configuration of the main part 100 of the robot 1. The main part 100 includes a head 101, a trunk (torso) 103 and a coupler 102 that couples the head 101 to the trunk 103. The main part 100 also includes a driver 40 that moves the head 101 with respect to the trunk 103. The driver 40 includes a twist motor 41 and a vertical motion motor 42. The twist motor 41 is a servo motor that rotates the head 101 and the coupler 102 within a predetermined angle range around a first rotation axis 401 extending in the extending direction of the coupler 102. The twist motor 41 operates to cause the robot 1 to turn its head (twist its neck). The vertical motion motor 42 is a servo motor that rotates the head 101 within a predetermined angle range

2

around a second rotation axis 402 perpendicular to the first rotation axis 401. The vertical motion motor 42 operates to cause the robot 1 to move its head up and down. The direction of the up- and-down movement of the head may be an inclined direction with respect to the vertical direction depending on the angle of the turn of the head by the twist motor 41. Causing the twist motor 41 and/or the vertical motion motor 42 to operate frequently (rapidly) and/or cyclically can cause the robot 1 to shake its head or quiver. Appropriately changing and combining timings, magnitudes and speeds of the operations of the twist motor 41 and the vertical motion motor 42 can cause the robot 1 to make various gestures.

The main part 100 also includes touch sensors 51, an acceleration sensor 52, a gyro sensor 53, an illuminance sensor 54, a microphone 55 and a sound outputter 30. The touch sensors 51 are disposed at the upper parts of the head 101 and the trunk 103. The illuminance sensor 54, the microphone 55 and the sound outputter 30 are disposed at the upper part of the trunk 103. The acceleration sensor 52 and the gyro sensor 53 are disposed at the lower part of the trunk 103.

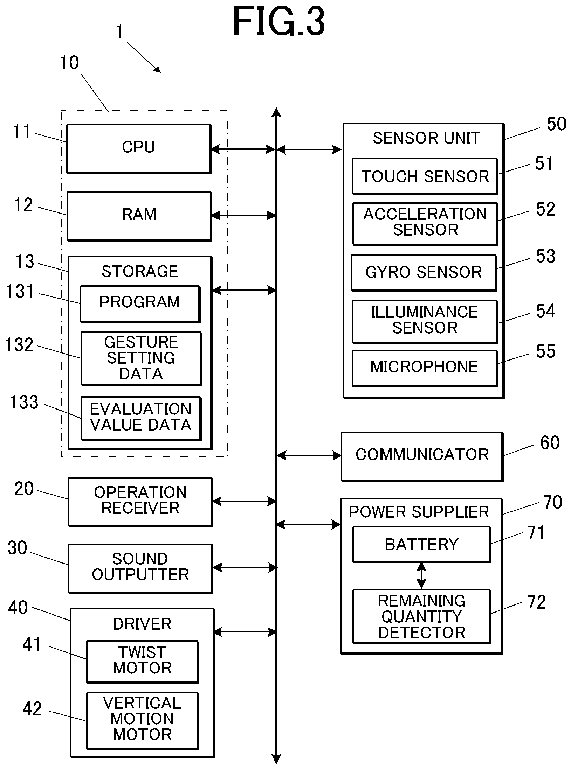

FIG. 3 is a block diagram illustrating a functional configuration of the robot 1. All functional components illustrated in FIG. 3 are disposed in/on the main part 100. The robot 1 includes a central processing unit (CPU) 11, a random access memory (RAM) 12, a storage 13, an operation receiver 20, a sound outputter 30, which is mentioned above, a driver 40, which is mentioned above, a sensor unit 50, the components of which are mentioned above, a communicator 60, and a power supplier 70. These components of the robot 1 are connected with one another via a communication path, such as a bus. The CPU 11, the RAM 12 and the storage 13 constitute a robot control device 10 that controls operation of the robot 1.

The CPU 11 is a processor that controls the operation of the robot 1 by reading and executing programs 131 stored in the storage 13 to perform various types of arithmetic processing. The robot 1 may have two or more processors (e.g., two or more CPUs), and two or more processes that are performed by the CPU 11 of this embodiment may be performed by the processors. In this case, the processors constitute the aforementioned processor. The processors may be involved in the same processes or independently perform different processes in parallel. The RAM 12 provides the CPU 11 with a memory space for work and stores temporary data.

The storage 13 is a non-transitory storage medium readable by the CPU 11 as a computer, and stores the programs 131 and various data. The storage 13 includes a nonvolatile memory, such as a flash memory. The programs 131 are stored in the storage 13 in the form of computer-readable program codes. The various data stored in the storage 13 include gesture setting data 132 (motion setting information) and evaluation value data 133 that are referred to in a gesture making process described later.

The operation receiver 20 includes operation buttons, operation knobs and the like for, for example, turning on and off power and adjusting the volume of a sound to be output by the sound outputter 30. The operation receiver 20 outputs pieces of operation information corresponding to input operations on the operation buttons, the operation knobs and the like to the CPU 11.

The sound outputter 30 includes a speaker, and outputs a sound with a pitch, a length and a volume in accordance with a control signal(s) and sound data transmitted from the CPU 11. The sound may be a sound simulating a cry of a living creature.

The driver 40 causes the above-described twist motor 41 and vertical motion motor 42 to operate in accordance with control signals transmitted from the CPU 11.

The sensor unit 50 includes the above-described touch sensors 51, acceleration sensor 52, gyro sensor 53, illuminance sensor 54 and microphone 55, and outputs detection results by these sensors and the microphone 55 to the CPU 11. The touch sensors 51, the acceleration sensor 52, the gyro sensor 53, the illuminance sensor 54 and the microphone 55 each correspond to "a sensor that detects an action from outside" and its similar expressions. The touch sensors 51 detect touches on the robot 1 by a user or another object. Examples of the touch sensors 51 include a pressure sensor and a capacitance sensor. On the basis of detection results transmitted from the touch sensors 51, the CPU 11 determines whether contact (interaction) between the robot 1 and the user has occurred. The acceleration sensor 52 detects acceleration in each of directions of three axes perpendicular to one another. The gyro sensor 53 detects angular velocity around each of the directions of three axes perpendicular to one another. The illuminance sensor 54 detects brightness around the robot 1. The microphone 55 detects sound(s) around the robot 1 and outputs data on the detected sound to the CPU 11.

The communicator 60 is a communication module including an antenna, a modulation-and-demodulation circuit and a signal processing circuit, and performs wireless data communication with an external device(s) in accordance with a predetermined communication standard.

The power supplier 70 includes a battery 71 and a remaining quantity detector 72. The battery 71 supplies electric power to the components of the robot 1. The battery 71 of this embodiment is a secondary cell that can be repeatedly charged by a contactless charging method. The remaining quantity detector 72 detects the remaining life of the battery 71 in accordance with a control signal transmitted from the CPU 11 and outputs a detection result to the CPU 11.

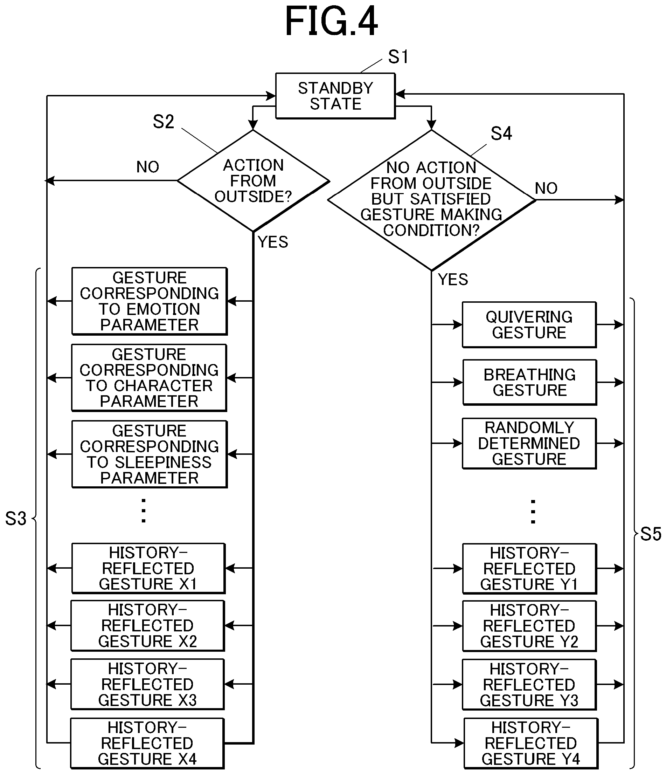

Next, the operation of the robot 1 will be described. FIG. 4 schematically illustrates transition of the operation state of the robot 1. The operation state of the robot 1 is changed under the control of the CPU 11. In a standby state (Step S1), the robot 1 is at rest without making a gesture.

If the CPU 11 determines that a predetermined action from outside (stimulus), which hereinafter may be referred to as an "external action", has been detected in the standby state (Step S2; YES), the CPU 11 causes the robot 1 to make one of predetermined gestures at a timing at which the robot 1 looks as if it is reacting to the action (Step S3). Examples of the external action include a touch, a hug and talking by the user. Touches are detected by the touch sensors 51. Hugs are detected by at least one of the touch sensors 51, the acceleration sensor 52 and the gyro sensor 53. Talking is detected by the microphone 55. Examples of the gestures that the robot 1 makes as reactions to external actions include gestures corresponding to internal parameters of the robot 1, such as an emotion parameter, a character parameter and a sleepiness parameter, and gestures reflecting contact history (contact records) between the robot 1 and the user, which are hereinafter referred to as "history-reflected gestures X1 to X4". The internal parameters are stored in the storage 13 and updated as appropriate in accordance with the environment of the robot 1, external actions and so forth. A method for generating and updating the history-reflected gestures X1 to X4 will be described later. When one of the gestures finishes, the CPU 11 changes the operation state of the robot 1 to the standby state.

In the standby state, if the CPU 11 determines that no predetermined external action has been detected but a predetermined gesture making condition is satisfied (Step S4; YES), the CPU 11 causes the robot 1 to make one of predetermined spontaneous gestures, which the robot 1 makes spontaneously (Step S5). Examples of the gesture making condition include a condition that a predetermined (length of) time has elapsed since a gesture was made last time, a condition that the brightness around the robot 1 is at a predetermined level or more, a condition that it is a predetermined time, a condition that the remaining life of the battery 71 is less than a predetermined value, a condition that it is presumed from detection result(s) by the sensor unit 50 that the user is near the robot 1, and any combinations of these. Examples of the spontaneous gestures include a quivering gesture, a breathing gesture, a randomly determined gesture, and gestures reflecting contact history (contact records) between the robot 1 and the user, which are hereinafter referred to as "history-reflected gestures Y1 to Y4". A method for generating and updating the history-reflected gestures Y1 to Y4 will be described later. When one of the gestures finishes, the CPU 11 changes the operation state of the robot 1 to the standby state.

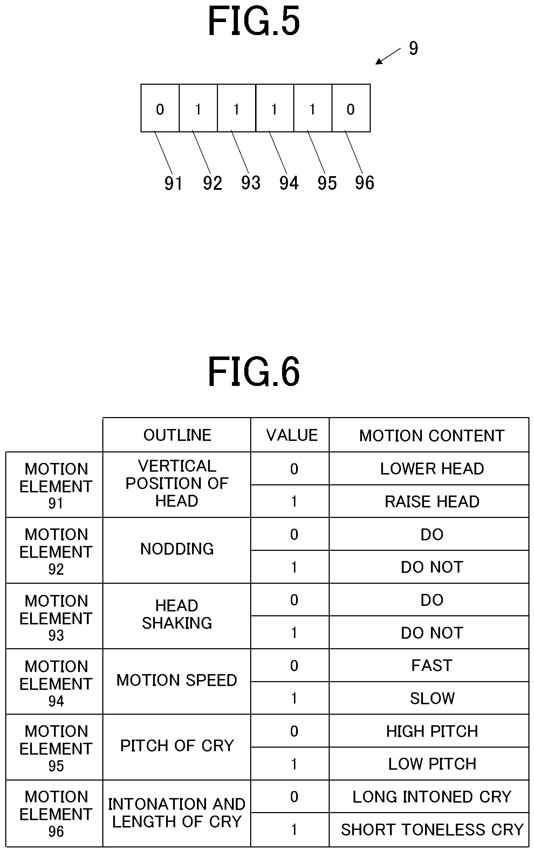

Each gesture by the robot 1 is made in accordance with a gesture pattern 9 (motion pattern) illustrated in FIG. 5. Gesture patterns 9 corresponding to all the gestures that the robot 1 makes are stored in the gesture setting data 132 of the storage 13. Each gesture pattern 9 is made up of a combination (array) of two or more motion elements. For example, in this embodiment, each gesture pattern 9 is made up of a combination of six motion elements 91 to 96. The motion elements 91 to 96 are each represented by a Boolean value ("0" or "1"). Therefore, there are $2^6$ combinations, namely, 64 combinations, as gesture patterns 9.

FIG. 6 illustrates the contents of the motion elements 91 to 96. The motion elements 91 to 96 each represent a motion of one part of the robot 1. The motion element 91 represents the vertical position of the head that is fixed/determined by the vertical motion motor 42. The motion element 91 represents, with a value of "0", lowering the head, and represents, with a value of "1", raising the head. The motion element 92 represents whether to nod (the head) with the vertical motion motor 42. The motion element 92 represents, with a value of "0", nodding, and represents, with a value of "1", not nodding. The motion element 93 represents whether to shake the head with the twist motor 41 and/or the vertical motion motor 42. The motion element 93 represents, with a value of "0", shaking the head, and represents, with a value of "1", not shaking the head. The motion element 94 represents the speed of motion (movement) of the head that is fixed/determined by the twist motor 41 and/or the vertical motion motor 42. The motion element 94 represents, with a value of "0", moving the head at a fast motion speed, and represents, with a value of "1", moving the head at a slow motion speed. The motion element 95 represents the pitch of a cry that is output by the sound outputter 30. The motion element 95 represents, with a value of "0", outputting a high-pitched cry, and represents, with a value of "1", outputting a low-pitched cry. The motion element 96 represents whether a cry that is output by the sound outputter 30 is intoned and also represents the length of the cry. The motion element 96 represents, with a value of "0", outputting a long intoned cry, and represents, with a value of "1", outputting a short toneless cry. The motion elements 91 to 93 each correspond to "presence or absence of movement of a predetermined part", the motion element 94 corresponds to "a speed of the movement of the predetermined part", the motion element 95 corresponds to "a pitch of a sound to be output", and the motion element 96 corresponds to "a length of the sound to be output".

In Step S3 or Step S5 in FIG. 4, the CPU 11 selects a gesture pattern 9 of a motion to make, and causes the driver 40 and the sound outputter 30 to operate such that the robot 1 moves (makes a motion) in accordance with the motion elements 91 to 96 of the selected gesture pattern 9. For example, if the gesture pattern 9 illustrated in FIG. 5 is selected, the motion elements 91 to 96 are "0", "1", "1", "1", "1" and "0", respectively, so that the CPU 11 causes the robot 1 to lower its head at a slow motion speed without nodding or shaking the head and output a long low-pitched intoned cry. In this specification, motions that the robot 1 makes in accordance with gesture patterns 9 are referred to as "gestures".

Next, the methods for generating the history-reflected gestures X1 to X4 and the history-reflected gestures Y1 to Y4 will be described. Hereinafter, the method for generating the history-reflected gestures Y1 to Y4, which the robot 1 makes spontaneously, will be described.

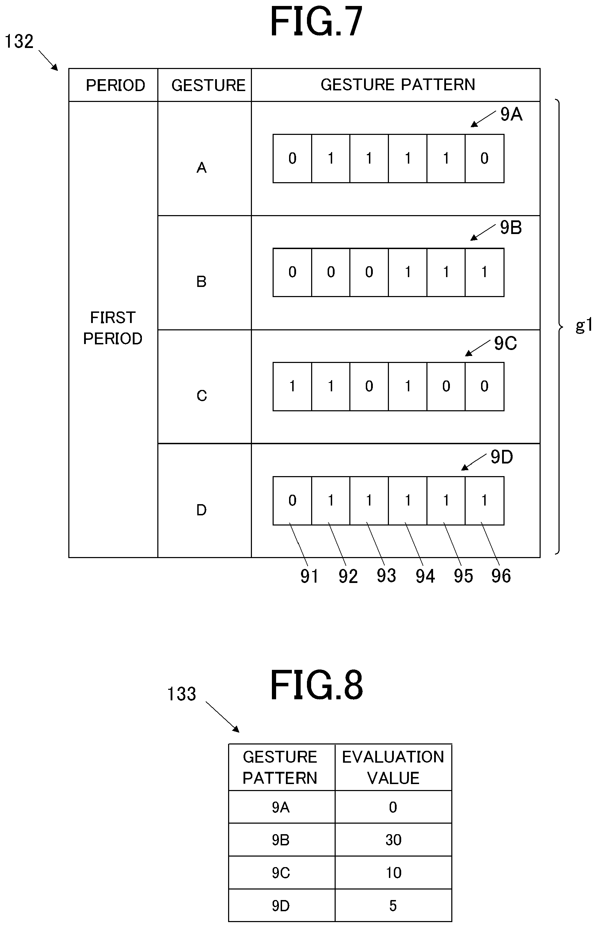

As illustrated in FIG. 7, at the time of initialization of the robot 1, gesture patterns 9A to 9D of gestures A to D for the first period are determined and stored in the gesture setting data 132. These four gesture patterns 9A to 9D constitute a gesture pattern group g1 (motion pattern group) for the first period. The gesture patterns 9A to 9D of the gestures A to D for the first period are determined by their motion elements 91 to 96 being randomly determined in combination of values. The gestures A to D correspond to the history-reflected gestures Y1 to Y4, respectively. The robot 1 is initialized when the robot 1 is started up first time after shipped from a factory or when a predetermined initialization command is input to the operation receiver 20 by the user. In this embodiment, the "period" refers to a period in the process of growth of the robot 1, which is one individual robot, and may be rephrased as a growth period of the robot 1 or an evaluation period of the gesture patterns of the robot 1.

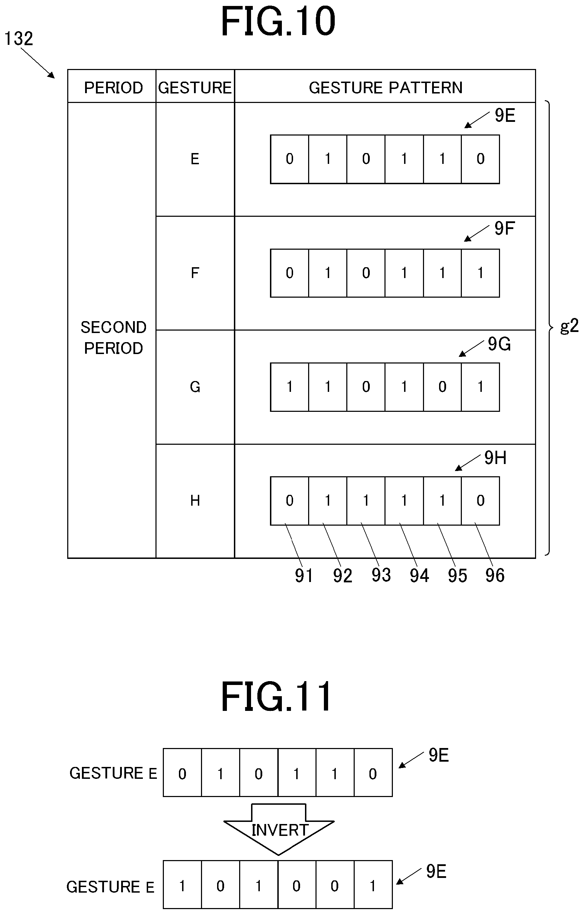

In accordance with the contact history between the user and the robot 1 after the gestures A to D are made, gesture patterns 9E to 9H (illustrated in FIG. 10) of gestures E to H for the second period (next period) are generated on the basis of the gesture patterns 9A to 9D of the gestures A to D for the first period. That is, although not illustrated in FIG. 4, after one of the history-reflected gestures Y1 to Y4 is made in Step S5, a process of generating the history-reflected gestures Y1 to Y4 for the next period may be performed. The gestures E to H for the next period also correspond to the history-reflected gestures Y1 to Y4, respectively. The gesture patterns 9A to 9D of the gestures A to D are overwritten with and updated to the gesture patterns 9E to 9H of the gestures E to H. The gesture patterns 9E to 9H of the gestures E to H for the second period partly inherit the gesture patterns 9A to 9D of the gestures A to D for the first period. Similarly, gesture patterns 9I to 9L of gestures I to L for the third period are generated on the basis of the gesture patterns 9E to 9H of the gestures E to H for the second period, and the gesture patterns 9E to 9H of the gestures E to H are overwritten with and updated to the gesture patterns 9I to 9L of the gestures I to L. In this manner, the gesture period keeps being updated. In the gesture setting data 132, a gesture pattern group g made up of four gesture patterns 9 for one period are stored. Thus, the robot 1 learns gestures through unsupervised learning in accordance with the contact history between the user and the robot 1, so that the gesture period is updated. Each time the gesture period is updated, the gesture patterns 9 for the gesture period before updated are partly inherited by the gesture patterns 9 for the gesture period after updated. Therefore, the gesture patterns 9 can be likened to genes (DNA) of living creatures. Further, the motion elements 91 to 96 can be likened to bases that constitute base sequences of genes. Therefore, the gesture patterns 9 may be rephrased as gesture genes.

Hereinafter, the method for generating the gesture patterns 9E to 9H of the gestures E to H for the second period on the basis of the gesture patterns 9A to 9D of the gestures A to D for the first period will be described. When one of the history-reflected gestures Y1 to Y4, namely, one of the gestures A to D for the first period, is made in Step S5 in FIG. 4, the CPU 11 derives the evaluation value of the gesture pattern 9 corresponding to the made gesture on the basis of a detection result(s) by the touch sensors 51 after the gesture is made. The evaluation value may be rephrased as a reward. In this embodiment, the evaluation value V of a gesture is derived by the following formula (1).

$$V = To - Tu \qquad (1)$$

The "To" represents a predetermined timeout time. The "To" is preset and stored in the storage 13, and may be, for example, about ten seconds to a few tens of seconds. The "Tu" represents a time from when a gesture was made until when the contact with the user occurred. More specifically, the "Tu" represents an elapsed time from a timing at which the CPU 11 caused the robot 1 to start to make a gesture with the driver 40 and the sound outputter 30 until a timing at which the touch sensor(s) 51 outputted a detection result corresponding to a touch by the user. Therefore, the shorter the time from when a gesture was made until when the user touched the robot 1, the higher the evaluation value of the gesture pattern 9 corresponding to the gesture. If the "To" elapses without the user touching the robot 1 after the robot 1 makes a gesture, the evaluation value of the gesture pattern 9 corresponding to the gesture is "0". The derived evaluation value is stored in the evaluation value data 133. In this embodiment, touches by the user are used as the contact that is reflected in the evaluation values, but the contact is not limited thereto. The contact may include hugs, talking and/or the like. For example, when a certain amount of change or more occurs in detection value(s) by the acceleration sensor 52 and/or the gyro sensor 53, the CPU 11 may determine that a hug as the contact has occurred. As another example, when a sound is detected by the microphone 55, the CPU 11 may determine that talking as the contact has occurred.

Each time Step S5 in FIG. 4 is performed, the CPU 11 causes, on the basis of the gesture setting data 132 illustrated in FIG. 7, the robot 1 to make one of the gestures A to D so as to make the gestures A to D in order, one time for each, at multiple times of Step S5. The CPU 11 may cause the robot 1 to make other one or more gestures (e.g., quivering gesture in FIG. 4) between any two of the gestures A to D. When the gestures A to D are each made one time, the evaluation values of their gesture patterns 9 are stored in the evaluation value data 133 as illustrated in FIG. 8. In this embodiment, the evaluation values of the gesture patterns 9A to 9D are "0", "30", "10" and "5", respectively. When the respective evaluation values of the gesture patterns 9 are stored, a gesture learning process for learning gestures for the next period is started. The gestures A to D may be made, instead of one time for each, the same number of times that is two or more times for each, and the cumulative value of the evaluation values of each gesture at the multiple times may be used as the evaluation value of the gesture.

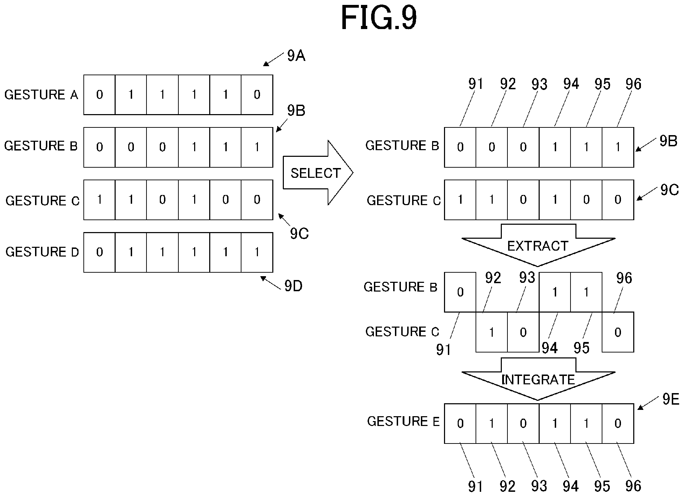

FIG. 9 is an illustration to explain the method for generating the gesture pattern 9E of the gesture E for the second period on the basis of the gesture patterns 9A to 9D of the gestures A to D for the first period. First, the CPU 11 selects two gesture patterns 9 from the four gesture patterns 9A to 9D on the basis of the evaluation values stored in the evaluation value data 133. In FIG. 9, the gesture patterns 9B and 9C are selected. The method for selecting the gesture patterns 9 may be a method of selecting a gesture pattern 9 having a higher evaluation value among the gesture patterns 9A to 9D with a higher probability. For example, the method may be a method of setting probabilities of 50%, 30%, 15% and 5% to the four gesture patterns 9 in descending order of their evaluation values, and repeatedly selecting one of the gesture patterns 9 with the aforementioned probabilities until selecting two different gesture patterns 9. Alternatively, the method may be a method of selecting two gesture patterns 9 from among the four gesture patterns 9A to 9D in descending order of their evaluation values. In this case, in the examples of the evaluation values illustrated in FIG. 8, the gesture patterns 9B and 9C are always selected. Still alternatively, the method may be a method of selecting two gesture patterns 9 in tournament format (elimination tournament). That is, the method may be a method of dividing the four gesture patterns 9A to 9D into two groups, and choosing a gesture pattern 9 having a higher evaluation value in each group.

When the two gesture patterns 9B and 9C are selected as illustrated at the upper right of FIG. 9, the CPU 11 extracts at least one motion element from each of the selected gesture patterns 9B and 9C and combines the extracted motion elements, thereby generating the gesture pattern 9E of the gesture E for the second period. More specifically, about each of the motion elements 91 to 96, the CPU 11 extracts the motion element from, of the two gesture patterns 9B and 9C, one gesture pattern 9 individually selected with a probability of 50% for each of the motion elements 91 to 96. In the example illustrated in FIG. 9, about the motion elements 91, 94 and 95, the motion elements of the gesture pattern 9B of the gesture B are extracted, and about the motion elements 92, 93 and 96, the motion elements of the gesture pattern 9C of the gesture C are extracted. By combining and integrating these extracted motion elements 91 to 96, the CPU 11 generates the gesture pattern 9E of the gesture E illustrated at the bottom part of FIG. 9. The process of generating, from two gesture patterns 9 for a certain period, one gesture pattern 9 for the next period corresponds to crossing gesture genes. Instead of extracting each motion element from one of two gesture patterns 9 with a probability of 50%, the gesture patterns 9 may have different probabilities with which their motion elements are extracted. For example, a gesture pattern 9 having a higher evaluation value may have a higher probability with which its motion elements are extracted.

In the same manner as the gesture pattern 9E of the gesture E, the gesture patterns 9F to 9H of the gestures F to H for the second period are generated. FIG. 10 illustrates examples of the gesture patterns 9E to 9H constituting a gesture pattern group g2 for the second period. The gesture patterns 9A to 9D stored in the gesture setting data 132 illustrated in FIG. 7 are overwritten with and updated to the gesture patterns 9E to 9H illustrated in FIG. 10. The gesture pattern 9F is generated from the gesture patterns 9B and 9D for the first period, the gesture pattern 9G is generated from the gesture patterns 9B and 9C for the first period, and the gesture pattern 9H is generated from the gesture patterns 9C and 9D for the first period. After the gesture patterns 9E to 9H are generated, at a timing at which Step S5 in FIG. 4 is performed, the robot 1 makes one of the gestures E to H for the second period as the history-reflected gestures Y1 to Y4. Among the gesture patterns 9E to 9H for the second period, the gesture patterns 9F to 9H that are generated second, third and fourth, respectively, may each be generated on the basis of the gesture patterns 9 for the second period generated before each of them (e.g., gesture pattern 9E and so forth) or the gesture pattern(s) 9 for the second period generated before each of them and the gesture patterns 9A to 9D for the first period.

By repeatedly updating the gesture period with the above-described method, the gesture patterns 9 of the gestures that the robot 1 makes change while inheriting the characteristics of the gesture patterns 9 having high evaluation values, namely, the characteristics of the gesture patterns 9 being likely to result in occurrence of the contact with the user (user's preferred gesture patterns 9). This enables the robot 1 to make lifelike gestures. As the update of the gesture period advances, two or more of the four gesture patterns 9 may become the same gesture pattern 9. This is called convergence of gestures or convergence of gesture patterns 9. According to the abovementioned gesture-period updating method, the history-reflected gestures Y1 to Y4 converge to user's preferred gestures. The length of time (number of days) until convergence of gesture patterns 9 can be adjusted by changing the number of motion elements that one (each) gesture pattern 9 has and/or the number of gesture patterns 9 included in the gesture pattern group g for one (each) period. The more the number of motion elements that one gesture pattern 9 has, the more the number of gesture patterns 9 and the longer the length of time until convergence of gesture patterns 9. Also, the more the number of gesture patterns 9 included in the gesture pattern group g for one period, the more the number of gesture patterns 9 and the longer the length of time until convergence of gesture patterns 9. As described above with reference to FIG. 4, the robot 1 makes gestures other than the history-reflected gestures X1 to X4 and Y1 to Y4. Therefore, even after the gesture patterns 9 converge, the number of gestures that the robot 1 makes as a whole is not significantly small. If almost no contact occurs between the robot 1 and the user, the situation in which the evaluation values of some of the gesture patterns 9 are high is unlikely to happen, and accordingly the gesture patterns 9 hardly converge. In other words, the unused state or its similar state of the robot 1 is maintained.

If, for example, none of the gestures corresponding to the four gesture patterns 9 for a certain period are user's preferred gestures, the evaluation values of the four gesture patterns 9 may be all low. If the update of the gesture period advances in this state, the gesture patterns 9 may converge to user's unpreferred gestures. Therefore, in this embodiment, if the sum of the evaluation values of the gesture patterns 9 for a certain period is equal to or less than a reference value, the values of the motion elements 91 to 96 of at least one gesture pattern 9 in the gesture pattern group g generated for the next period are inverted as illustrated in FIG. 11. In the example illustrated in FIG. 11, the motion elements 91 to 96 of the gesture E are inverted from "0, 1, 0, 1, 1, 0" to "1, 0, 1, 0, 0, 1". This process can be likened to mutations of living creatures. The mutations can prevent learning of the gesture patterns 9 from converging in the state in which the evaluation values are low. The reference value may be, for example, 10% or less of the maximum value that the sum of the evaluation values can be. Alternatively, the reference value may be "0", and a mutation may be caused when the evaluation values of the gesture patterns 9 are all "0".

Although the method for generating and updating the history-reflected gestures Y1 to Y4 has been described above, the history-reflected gestures X1 to X4, which the robot 1 makes as reactions to external actions, are also generated and updated by the same method. The history-reflected gestures X1 to X4 and the history-reflected gestures Y1 to Y4 are generated and updated separately and independently. Therefore, in the gesture setting data 132, a gesture pattern group gx made up of the history-reflected gestures X1 to X4 and a gesture pattern group gy made up of the history-reflected gestures Y1 to Y4 are stored separately. In the evaluation value data 133, the evaluation values of the gesture patterns 9 of the history-reflected gestures X1 to X4 and the evaluation values of the gesture patterns 9 of the history-reflected gestures Y1 to Y4 are also stored separately.

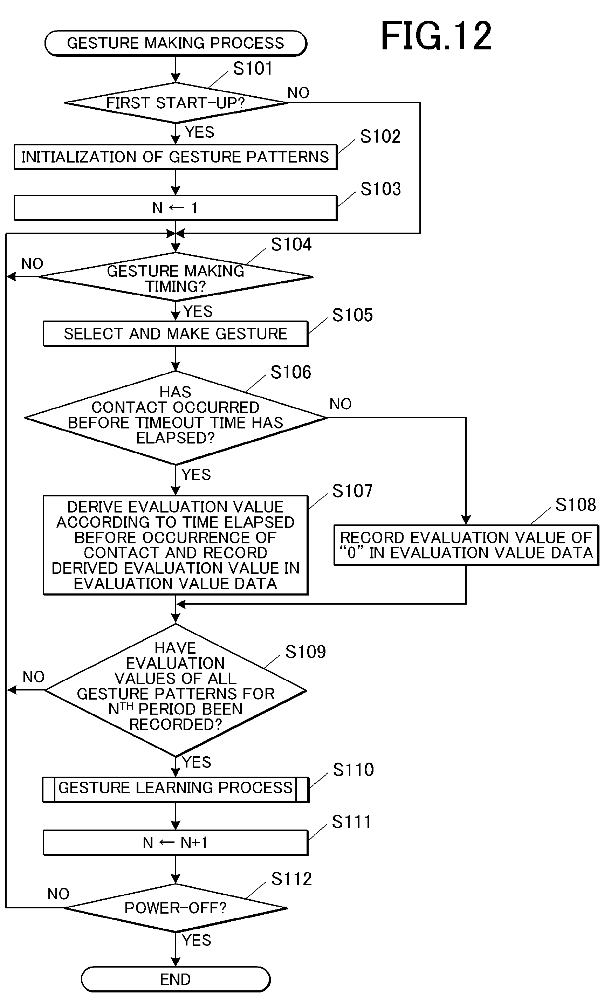

Next, the gesture making process that is performed by the CPU 11 to realize the above-described operation will be described. FIG. 12 is a flowchart illustrating a control procedure for the gesture making process. The gesture making process starts when the robot 1 is powered on.

When the gesture making process starts, the CPU 11 determines whether this is the first start-up of the robot 1 after shipped from a factory (Step S101). If the CPU 11 determines that this is the first start-up (Step S101; YES), the CPU 11 initializes the gesture patterns 9 of the gesture pattern group g stored in the gesture setting data 132 (Step S102). That is, the CPU 11 sets the motion elements 91 to 96 of each gesture pattern 9 at random in combination of their values. The CPU 11 assigns "1" to a variable N that represents the number of gesture periods (Step S103).

After Step S103 or if the CPU 11 determines in Step S101 that this is not the first start-up (Step S101; NO), the CPU 11 repeatedly determines whether it is a timing to make a gesture, which is hereinafter referred to as a "gesture making timing" (Step S104). If the CPU 11 determines that it is a gesture making timing (Step S104; YES), the CPU 11 selects one gesture and causes the robot 1 to make the gesture (Step S105). More specifically, the CPU 11 selects one gesture pattern 9 from the gesture setting data 132 and causes the driver 40 and the sound outputter 30 to operate in accordance with the motion elements 91 to 96 of the selected gesture pattern 9, thereby causing the robot 1 to make a gesture. Step S104; YES corresponds to Step S2; YES or Step S4; YES in FIG. 4. Also, Step S105 corresponds to Step S3 or Step S5 in FIG. 4.

After the robot 1 makes the gesture, the CPU 11 determines whether contact between the user and the robot 1 has occurred before the timeout time To has elapsed (Step S106). In this embodiment, when the touch sensor(s) 51 detects a touch, the CPU 11 determines that the contact has occurred. If the CPU 11 determines that the contact has occurred before the timeout time To has elapsed (Step S106; YES), the CPU 11 derives, using the above formula (1), an evaluation value according to the time elapsed from the start of the gesture until the occurrence of the contact, and records the evaluation value in the evaluation value data 133 (Step S107). If the CPU 11 determines that the contact has not occurred before the timeout time To has elapsed (Step S106; NO), the CPU 11 records an evaluation value of "0" in the evaluation value data 133 (Step S108). After Step S107 or Step S108, the CPU 11 determines whether the evaluation values of all the gesture patterns 9 for the $N^{th}$ period have been recorded (Step S109). If the CPU 11 determines that the evaluation value of any of the gesture patterns 9 has not been recorded (Step S109; NO), the CPU 11 returns the process to Step S104. If the CPU 11 determines that the evaluation values of all the gesture patterns 9 have been recorded (Step S109; YES), the CPU 11 performs the gesture learning process (Step S110).

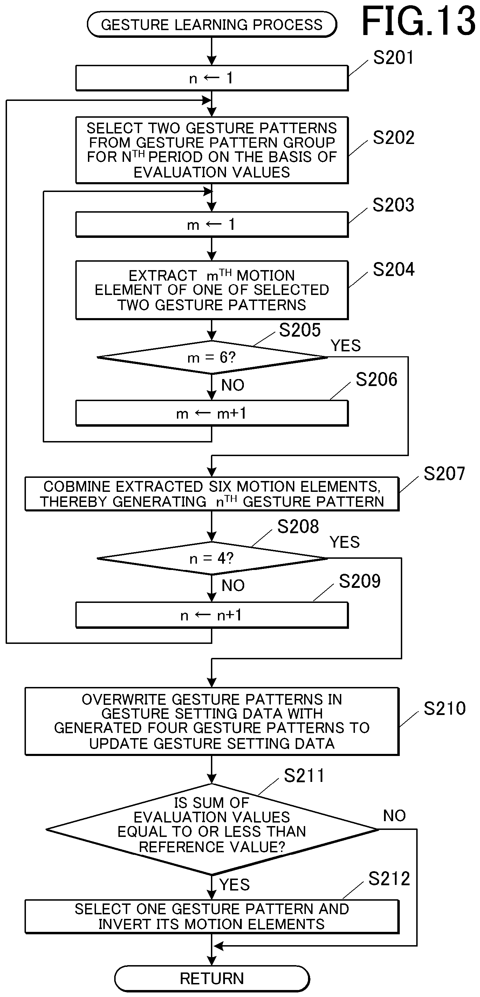

FIG. 13 is a flowchart illustrating a control procedure for the gesture learning process. When the gesture learning process is called, the CPU 11 assigns "1" to a variable n that represents the ordinal numbers of the gesture patterns 9 constituting the gesture pattern group g for one period (Step S201). The CPU 11 selects two gesture patterns 9 from the gesture pattern group gN for the $N^{th}$ period on the basis of the evaluation values (Step S202). The CPU 11 assigns "1" to a variable m that represents the ordinal numbers of the motion elements 91 to 96 of each gesture pattern 9 (Step S203). The CPU 11 extracts the $m^{th}$ motion element of one of the two gesture patterns 9 selected in Step S202, the one being determined with a probability of 50% (Step S204). The CPU 11 determines whether the variable m is "6" that is the maximum number of motion elements (Step S205). If the CPU 11 determines that the variable m is 5 or less (Step S205; NO), the CPU 11 assigns "m + 1" to the variable m (Step S206), and returns the process to Step S203.

If the CPU 11 determines that the variable m is 6 (Step S205; YES), the CPU 11 combines the six motion elements extracted in the loop process of Step S203 to Step S206, thereby generating the $n^{th}$ gesture pattern 9 (Step S207). The CPU 11 determines whether the variable n is "4" that is the maximum number of gesture patterns 9 for one period (Step S208) . If the CPU 11 determines that the variable n is 3 or less (Step S208; NO), the CPU 11 assigns "n + 1" to the variable n (Step S209), and returns the process to Step S202. If the CPU 11 determines that the variable n is 4 (Step S208; YES), the CPU 11 overwrites the existing gesture patterns 9 stored in the gesture setting data 132 with the four gesture patterns 9 generated in the loop process of Step S202 to Step S209 to update the gesture setting data 132 (Step S210) .

The CPU 11 determines whether the sum of the evaluation values stored in the evaluation value data 133 is equal to or less than a reference value (Step S211). If the CPU 11 determines that the sum of the evaluation values is equal to or less than the reference value (Step S211; YES), the CPU 11 randomly selects one generated gesture pattern 9, inverts its motion elements 91 to 96 as illustrated in FIG. 11, and updates the gesture setting data 132 to the inverted contents (Step S212). After Step S212 or if the CPU 11 determines that the sum of the evaluation values is more than the reference value (Step S211; NO), the CPU 11 ends the gesture learning process, and returns the process to the gesture making process.

After ending the gesture learning process in Step S110 in FIG. 12, the CPU 11 assigns "N + 1" to the variable N (Step S111). The CPU 11 determines whether an operation to turn off the power of the robot 1 has been made (Step S112). If the CPU 11 determines that the operation has not been made (Step S112; NO), the CPU 11 returns the process to Step S104. If the CPU 11 determines that the operation has been made (Step S112; YES), the CPU 11 ends the gesture making process. If the user issues a predetermined initialization command during the gesture making process, the CPU 11 may move the process to Step S102.

As described above, the robot control device 10 of this embodiment includes the CPU 11 (processor). The CPU 11 causes the robot 1 to make gestures (motions) in accordance with their respective gesture patterns 9 (motion patterns) each of which is made up of a combination of the motion elements 91 to 96, in response to detecting an action(s) from outside with the sensor unit 50 (sensor). The CPU 11 derives the respective evaluation values of the gesture patterns 9, and generates a new gesture pattern 9 by combining, based on the evaluation values, the motion elements 91 to 96 of the gesture patterns 9. This can change the gestures that the robot 1 makes and enables the robot 1 to make lifelike gestures. Further, since the characteristics of the gesture patterns 9 having high evaluation values proportional to the contact between the user and the robot 1 are inherited by the gesture patterns 9 for the next period, the robot 1 can be made to look as if it learns the situation of the contact with the user and changes the gestures to make. Thus, an AI pet that grows according to the contact with the user can be expressed. Further, to what gestures the gestures converge by the update of the gesture period are different from user to user. Thus, the robot 1 can grow to have a personality suitable for (preferred by) its user.

Further, the CPU 11 derives the respective evaluation values of the gesture patterns 9 based on detection results by the sensor unit 50 after the gestures are made in accordance with their respective gesture patterns 9. Thus, the evaluation value of each gesture pattern 9 can be appropriately derived on the basis of, for example, presence or absence of an action from the user.

Further, the CPU 11 selects, from among the gesture patterns 9, a gesture pattern 9 having a higher evaluation value among the gesture patterns 9 with a higher probability to select at least two gesture patterns 9, and generates the new gesture pattern 9 by combining the motion elements 91 to 96 of the at least two gesture patterns 9. This makes it likely that the motion elements of the gesture patterns 9 having high evaluation values are inherited by the gesture patterns 9 for the next period. Thus, the robot 1 can learn user's preferred gestures to make.

The CPU 11 may select at least two gesture patterns 9 from among the gesture patterns 9 in descending order of the evaluation values, and generate the new gesture pattern 9 by combining the motion elements 91 to 96 of the at least two gesture patterns 9. This makes it more likely that the motion elements of the gesture patterns 9 having high evaluation values are inherited by the gesture patterns 9 for the next period.

The CPU 11 may select two gesture patterns 9 from among the gesture patterns 9 based on the evaluation values, and generate the new gesture pattern 9 by combining the motion elements 91 to 96 each extracted from, of the two gesture patterns 9, one gesture pattern 9 individually selected with a predetermined probability for each of the motion elements 91 to 96. Thus, the gesture patterns adequately different from the gesture patterns for the current period can be generated by a simple process.

Further, each of the motion elements 91 to 96 is represented by a Boolean value. Thus, each of the motion elements can be determined by a simple process of choosing either one of the Boolean values. Therefore, the load of the CPU 11, which performs the gesture learning process, can be reduced.

Further, the CPU 11 generates, as the new gesture pattern 9, new gesture patterns 9 by combining, based on the evaluation values, the motion elements 91 to 96 of the gesture patterns 9, and in response to the sum of the evaluation values being equal to or more than a reference value, inverts the Boolean value of each of the motion elements 91 to 96 of at least one of the generated new gesture patterns 9. This can prevent learning of the gesture patterns 9 from converging in the state in which the evaluation values are low. That is, this can prevent learning of the gesture patterns 9 if, for example, the contact between the robot 1 and the user is a little or little.

Further, the CPU 11 determines whether the user has touched the robot 1 based on a detection result(s) by the sensor unit 50, and derives the evaluation values such that as the time from when the robot 1 made a gesture until when the sensor unit 50 detected a touch on the robot 1 is shorter, the evaluation value of a gesture pattern 9 corresponding to the gesture is higher. This makes it possible that the characteristics of the gestures that are likely to lead to the contact with the user are inherited by the gestures for the next period.

Further, the motion elements 91 to 96 of the gesture patterns 9 include presence or absence of movement of a predetermined part, the speed of the movement of the predetermined part, the pitch of a sound to be output, and/or the length of the sound to be output. This enables the robot 1 to make gestures different from one another in the movement of a part and/or the sound to be output, by a simple method of creating different combinations of the motion elements 91 to 96.

Further, the robot 1 of this embodiment includes the robot control device 10 and the sensor unit 50. This can produce the robot 1 that makes lifelike gestures.

Further, the robot control method of this embodiment that controls the robot 1 includes deriving the respective evaluation values of gesture patterns 9, and generating a new gesture pattern 9 by combining, based on the evaluation values, the motion elements 91 to 96 of the gesture patterns 9. This enables the robot 1 to make lifelike gestures.

Further, the storage 13 as the non-transitory computer-readable storage medium of this embodiment stores the program(s) 131 of this embodiment. The program 131 causes the CPU 11 (computer) of the robot control device 10 to derive the respective evaluation values of gesture patterns 9, and generate a new gesture pattern 9 by combining, based on the evaluation values, the motion elements 91 to 96 of the gesture patterns 9.

This enables the robot 1 to make lifelike gestures.

The present disclosure is not limited to the above embodiment, but can be modified in a variety of aspects. For example, the contents of the gesture patterns 9 as the motion patterns are not limited to those exemplified in the above embodiment. For example, the number of motion elements constituting each gesture pattern 9, namely, "m", is not limited to six, but may be any number equal to or more than two. Further, the contents of the motion elements can be changed as appropriate for the configuration of the robot 1. For example, if the robot 1 has limbs (arms and/or legs), motion elements representing motions of the limbs may be provided, whereas if the robot 1 has a light emitter and/or a display, motion elements representing light emission forms of the light emitter and/or display contents of the display may be provided.

Further, the number of gestures for one (each) period, namely, "n", is not limited to four, but may be any number equal to or more than two. Further, in the above embodiment, from two gesture patterns 9 for a certain period, a gesture pattern 9 for the next period is generated, but instead, from three or more but less than n gesture patterns 9 for a certain period, a gesture pattern 9 for the next period may be generated.

Further, in the above embodiment, the shorter the time from when the user made a gesture until when the user touched the robot 1, the higher the evaluation value of the gesture, but the evaluation-value deriving method is not limited thereto. For example, the method may be a method of deriving the evaluation value such that the longer the cumulative time that the user touched the robot 1 in a predetermined period after the robot 1 made a gesture, the higher the evaluation value. Alternatively, the method may be a method of deriving the evaluation value on the basis of the timing, the length, the voice volume and/or the like of user's talking to the robot 1 in a predetermined period after the robot 1 made a gesture. Two or more of such deriving methods may be used in combination. Further, the evaluation value may be the cumulative value, the average value, the median value or the like of actions from the user in a predetermined period, such as the number of touches and/or other actions, or the cumulative value, the average value, the median value or the like of actions of multiple types from the user.

Further, in the above embodiment, if the sum of the evaluation values of the gestures for (and made in) a certain period is equal to or less than a reference value, at least one gesture pattern 9 generated for the next period is inverted. However, regardless of the sum of the evaluation values, at least one gesture pattern 9 generated for the next period may be inverted at a predetermined timing. This can prevent the user from losing interest in the robot 1, and enables the robot 1 to meet change in the user's preferences.

Further, the motion elements are not limited to the Boolean values. The motion elements each may take one of three or more values different from one another.

Further, the configuration of the robot 1 is not limited to the one illustrated in FIG. 1 to FIG. 3. For example, the robot 1 may be a robot made to simulate an existing living creature, such as a human, an animal, a bird or a fish, a robot made to simulate a no-more-existing living creature, such as a dinosaur, or a robot made to simulate an imaginary living creature.

Further, in the above embodiment, the robot control device 10 that controls the robot 1 is disposed inside the robot 1, but not limited thereto. For example, the robot control device 10 may be a robot control device disposed outside the robot 1 to control and cause the robot 1 to operate. This externally disposed robot control device may be a smartphone, a tablet terminal or a notebook PC, for example. In this case, the robot 1 operates in accordance with control signals received from the externally disposed robot control device via the communicator 60. The externally disposed robot control device performs the functions that the robot control device 10 of the above embodiment performs.

Further, in the above embodiment, the flash memory of the storage 13 is used as the computer-readable medium storing the programs of the present disclosure, but the computer-readable medium is not limited thereto. As the computer-readable medium, an information storage/recording medium, such as a hard disk drive (HDD), a solid state drive (SSD) or a CD-ROM, is also applicable. Further, a carrier wave is applicable as a medium that provides data of the programs of the present disclosure via a communication line.

Further, it goes without saying that the detailed configuration and detailed operation of each component of the robot 1 in the above embodiment can be modified as appropriate without departing from the scope of the present disclosure.

Although one or more embodiments of the present disclosure have been described above, the scope of the present disclosure is not limited to the embodiments above, but includes the scope of claims below and the scope of their equivalents.

**Claims**

1. A robot control device (10) that controls a robot (1) including a sensor (50) that detects an action from outside, comprising a processor (11) configured to:

   cause the robot (1) to make motions in accordance with respective motion patterns (9) each of which is made up of a combination of motion elements (91, 92, 93, 94, 95, 96), in response to detecting the action from the outside with the sensor (50);
   derive respective evaluation values of the motion patterns (9); and
   generate a new motion pattern (9) by combining, based on the evaluation values, the motion elements (91, 92, 93, 94, 95, 96) of the motion patterns (9).

2. The robot control device (10) according to claim 1, wherein the processor (11) is configured to derive the respective evaluation values of the motion patterns (9) based on detection results by the sensor (50) after the motions are made in accordance with the respective motion patterns (9).

3. The robot control device (10) according to claim 1, wherein the processor (11) is configured to:

   select, from among the motion patterns (9), a motion pattern (9) having a higher evaluation value among the motion patterns (9) with a higher probability to select at least two motion patterns (9); and
   generate the new motion pattern (9) by combining the motion elements (91, 92, 93, 94, 95, 96) of the at least two motion patterns (9).

4. The robot control device (10) according to claim 1, wherein the processor (11) is configured to:

   select at least two motion patterns (9) from among the motion patterns (9) in descending order of the evaluation values; and
   generate the new motion pattern (9) by combining the motion elements (91, 92, 93, 94, 95, 96) of the at least two motion patterns (9).

5. The robot control device (10) according to claim 1, wherein the processor (11) is configured to:

   select two motion patterns (9) from among the motion patterns (9) based on the evaluation values; and
   generate the new motion pattern (9) by combining the motion elements (91, 92, 93, 94, 95, 96) each extracted from, of the two motion patterns (9), one motion pattern (9) individually selected with a predetermined probability for each of the motion elements (91, 92, 93, 94, 95, 96).

6. The robot control device (10) according to claim 1, wherein each of the motion elements (91, 92, 93, 94, 95, 96) is represented by a Boolean value.

7. The robot control device (10) according to claim 6, wherein the processor (11) is configured to:

   generate, as the new motion pattern (9), new motion patterns (9) by combining, based on the evaluation values, the motion elements (91, 92, 93, 94, 95, 96) of the motion patterns (9); and
   in response to a sum of the evaluation values being equal to or more than a reference value, inverts the Boolean value of each of the motion elements (91, 92, 93, 94, 95, 96) of at least one of the generated new motion patterns (9).

8. The robot control device (10) according to claim 1, wherein the processor (11) is configured to:

determine whether a user has touched the robot (1) based on a detection result by the sensor (50), and
derive the evaluation values such that as a time from when the robot (1) made a motion until when the sensor (50) detected a touch on the robot (1) is shorter, an evaluation value of a motion pattern (9) corresponding to the motion is higher.

9. The robot control device (10) according to claim 1, wherein the motion elements (91, 92, 93, 94, 95, 96) of the motion patterns (9) include at least one of presence or absence of movement of a predetermined part, a speed of the movement of the predetermined part, a pitch of a sound to be output, or a length of the sound to be output.

10. A robot (1) comprising:

the robot control device (10) according to any one of claims 1 to 9; and
the sensor (50).

11. A program (131) causing, of a robot control device (10) that controls a robot (1) including a sensor (50) that detects an action from outside, a computer (11) to:

cause the robot (1) to make motions in accordance with respective motion patterns (9) each of which is made up of a combination of motion elements (91, 92, 93, 94, 95, 96), in response to detecting the action from the outside with the sensor (50);
derive respective evaluation values of the motion patterns (9); and
generate a new motion pattern (9) by combining, based on the evaluation values, the motion elements (91, 92, 93, 94, 95, 96) of the motion patterns (9).

# FIG.1

# FIG.2

# FIG.3

1

10

| | |
|---|---|
| 11 — CPU | |
| 12 — RAM | |
| 13 — STORAGE | |
| 131 — PROGRAM | |
| 132 — GESTURE SETTING DATA | |
| 133 — EVALUATION VALUE DATA | |

SENSOR UNIT — 50

TOUCH SENSOR — 51

ACCELERATION SENSOR — 52

GYRO SENSOR — 53

ILLUMINANCE SENSOR — 54

MICROPHONE — 55

COMMUNICATOR — 60

20 — OPERATION RECEIVER

30 — SOUND OUTPUTTER

40 — DRIVER

41 — TWIST MOTOR

42 — VERTICAL MOTION MOTOR

POWER SUPPLIER — 70

BATTERY — 71

REMAINING QUANTITY DETECTOR — 72

# FIG.4

```
                                          ┌─ S1
                              ┌──────────────────┐
                              │  STANDBY         │
                              │  STATE           │
                              └──────────────────┘
          S2                    ↓              ↓                   S4
          ↓                 ◇                      ◇                ↓
    NO   ┌────────────  ACTION              NO ACTION    ──── NO ──→
         │              FROM                FROM OUTSIDE
         │              OUTSIDE?            BUT SATISFIED
         │                 ◇               GESTURE MAKING
         │                                 CONDITION?
         │               YES                    ◇
         │                ↓                     YES
```

S2 — ACTION FROM OUTSIDE?  — NO / YES

S4 — NO ACTION FROM OUTSIDE BUT SATISFIED GESTURE MAKING CONDITION? — NO / YES

S3:
- GESTURE CORRESPONDING TO EMOTION PARAMETER
- GESTURE CORRESPONDING TO CHARACTER PARAMETER
- GESTURE CORRESPONDING TO SLEEPINESS PARAMETER
- ⋮
- HISTORY-REFLECTED GESTURE X1
- HISTORY-REFLECTED GESTURE X2
- HISTORY-REFLECTED GESTURE X3
- HISTORY-REFLECTED GESTURE X4

S5:
- QUIVERING GESTURE
- BREATHING GESTURE
- RANDOMLY DETERMINED GESTURE
- ⋮
- HISTORY-REFLECTED GESTURE Y1
- HISTORY-REFLECTED GESTURE Y2
- HISTORY-REFLECTED GESTURE Y3
- HISTORY-REFLECTED GESTURE Y4

# FIG.5

```
┌───┬───┬───┬───┬───┬───┐
│ 0 │ 1 │ 1 │ 1 │ 1 │ 0 │
└───┴───┴───┴───┴───┴───┘
  91  92  93  94  95  96
```

9

# FIG.6

|  |  | OUTLINE | VALUE | MOTION CONTENT |
|---|---|---|---|---|
| MOTION ELEMENT 91 | VERTICAL POSITION OF HEAD | 0 | LOWER HEAD |
| | | 1 | RAISE HEAD |
| MOTION ELEMENT 92 | NODDING | 0 | DO |
| | | 1 | DO NOT |
| MOTION ELEMENT 93 | HEAD SHAKING | 0 | DO |
| | | 1 | DO NOT |
| MOTION ELEMENT 94 | MOTION SPEED | 0 | FAST |
| | | 1 | SLOW |
| MOTION ELEMENT 95 | PITCH OF CRY | 0 | HIGH PITCH |
| | | 1 | LOW PITCH |
| MOTION ELEMENT 96 | INTONATION AND LENGTH OF CRY | 0 | LONG INTONED CRY |
| | | 1 | SHORT TONELESS CRY |

# FIG.7

132

| PERIOD | GESTURE | GESTURE PATTERN |
|--------|---------|-----------------|
| FIRST PERIOD | A | 9A: `0 1 1 1 1 0` |
| | B | 9B: `0 0 0 1 1 1` |
| | C | 9C: `1 1 0 1 0 0` |
| | D | 9D: `0 1 1 1 1 1` |

91 92 93 94 95 96

g1

# FIG.8

133

| GESTURE PATTERN | EVALUATION VALUE |
|-----------------|------------------|
| 9A | 0 |
| 9B | 30 |
| 9C | 10 |
| 9D | 5 |

# FIG.9

# FIG.10

132

| PERIOD | GESTURE | GESTURE PATTERN |
|---|---|---|
| SECOND PERIOD | E | 9E<br>0 1 0 1 1 0 |
| | F | 9F<br>0 1 0 1 1 1 |
| | G | 9G<br>1 1 0 1 0 1 |
| | H | 9H<br>0 1 1 1 1 0 |

91 92 93 94 95 96

g2

# FIG.11

GESTURE E | 0 | 1 | 0 | 1 | 1 | 0 | 9E

INVERT

GESTURE E | 1 | 0 | 1 | 0 | 0 | 1 | 9E

# FIG.12

```
        ┌─────────────────────────────┐
        │  GESTURE MAKING PROCESS     │
        └─────────────────────────────┘
                     │
                     │  S101
                     ▼
              ◇─────────────◇         NO
              FIRST START-UP? ──────────────┐
              ◇─────────────◇               │
                     │ YES                   │
                     ▼  S102                 │
        ┌─────────────────────────────┐      │
        │ INITIALIZATION OF GESTURE   │      │
        │ PATTERNS                    │      │
        └─────────────────────────────┘      │
                     │  S103                 │
                     ▼                       │
        ┌─────────────────────────────┐      │
        │          N ← 1              │      │
        └─────────────────────────────┘      │
                     │◄──────────────────────┘
            ┌────────┤
            │        │  S104
     NO     ▼        ▼
    ◄────◇ GESTURE MAKING ◇
          ◇   TIMING?    ◇
                     │ YES
                     ▼  S105
        ┌─────────────────────────────┐
        │   SELECT AND MAKE GESTURE   │
        └─────────────────────────────┘
                     │
                     ▼  S106
            ◇─────────────────◇
            HAS CONTACT OCCURRED         NO
            BEFORE TIMEOUT TIME HAS ──────────┐
            ELAPSED?                           │
            ◇─────────────────◇                │
                     │ YES                      │
                     ▼  S107                     ▼  S108
   ┌───────────────────────────────┐   ┌──────────────────────────┐
   │ DERIVE EVALUATION VALUE       │   │ RECORD EVALUATION VALUE  │
   │ ACCORDING TO TIME ELAPSED     │   │ OF "0" IN EVALUATION     │
   │ BEFORE OCCURRENCE OF          │   │ VALUE DATA               │
   │ CONTACT AND RECORD            │   └──────────────────────────┘
   │ DERIVED EVALUATION VALUE IN   │              │
   │ EVALUATION VALUE DATA         │              │
   └───────────────────────────────┘              │
                     │◄───────────────────────────┘
                     ▼  S109
            ◇─────────────────◇
            HAVE EVALUATION
    NO      VALUES OF ALL
   ◄──────  GESTURE PATTERNS FOR
            NTH PERIOD BEEN
            RECORDED?
            ◇─────────────────◇
                     │ YES
                     ▼  S110
        ┌─────────────────────────────┐
        │  GESTURE LEARNING PROCESS   │
        └─────────────────────────────┘
                     │  S111
                     ▼
        ┌─────────────────────────────┐
        │          N ← N+1            │
        └─────────────────────────────┘
                     │  S112
    NO               ▼
   ◄────── ◇    POWER-OFF?    ◇
                     │ YES
                     ▼
        ┌─────────────────────────────┐
        │            END              │
        └─────────────────────────────┘
```

S109: HAVE EVALUATION VALUES OF ALL GESTURE PATTERNS FOR $N^{TH}$ PERIOD BEEN RECORDED?

# FIG.13

GESTURE LEARNING PROCESS

n ← 1 — S201

SELECT TWO GESTURE PATTERNS FROM GESTURE PATTERN GROUP FOR $N^{TH}$ PERIOD ON THE BASIS OF EVALUATION VALUES — S202

m ← 1 — S203

EXTRACT $m^{TH}$ MOTION ELEMENT OF ONE OF SELECTED TWO GESTURE PATTERNS — S204

S205 — m = 6? — YES

NO

m ← m+1 — S206

COBMINE EXTRACTED SIX MOTION ELEMENTS, THEREBY GENERATING $n^{TH}$ GESTURE PATTERN — S207

S208 — n = 4? — YES

NO

n ← n+1 — S209

OVERWRITE GESTURE PATTERNS IN GESTURE SETTING DATA WITH GENERATED FOUR GESTURE PATTERNS TO UPDATE GESTURE SETTING DATA — S210

S211 — IS SUM OF EVALUATION VALUES EQUAL TO OR LESS THAN REFERENCE VALUE? — NO

YES

SELECT ONE GESTURE PATTERN AND INVERT ITS MOTION ELEMENTS — S212

RETURN

Europäisches
Patentamt

European
Patent Office

Office européen
des brevets

# EUROPEAN SEARCH REPORT

**Application Number**

EP 24 21 9892

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/045203 A1 (SABE KOHTARO [JP] ET AL) 6 March 2003 (2003-03-06)<br>* paragraph [0074] - paragraph [0075] *<br>* paragraph [0127] *<br>* paragraph [0143] - paragraph [0147] *<br>* paragraph [0152] - paragraph [0156] *<br>* paragraph [0161] *<br>* paragraph [0231] *<br>* paragraph [0241] - paragraph [0242] *<br>* figures 1, 5, 22 *<br>----- | 1-11 | INV.<br>G06N3/008<br>B25J11/00 |
| X | US 2002/016128 A1 (SAITO SHINYA [JP]) 7 February 2002 (2002-02-07)<br>* paragraph [0016] *<br>* paragraph [0040] *<br>* paragraph [0052] - paragraph [0065] *<br>* figures 1, 2, 12 - 17 *<br>----- | 1-11 | |
| A | JP 2002 163631 A (TOSHIBA CORP) 7 June 2002 (2002-06-07)<br>* the whole document *<br>----- | 1-11 | |
| A | US 2022/299999 A1 (HASEGAWA HIROKAZU [JP] ET AL) 22 September 2022 (2022-09-22)<br>* the whole document *<br>----- | 1-11 | TECHNICAL FIELDS SEARCHED (IPC)<br><br>A63D<br>A63H<br>G05B<br>G06N<br>B25J |

The present search report has been drawn up for all claims

| Place of search | Date of completion of the search | Examiner |
|---|---|---|
| The Hague | 13 May 2025 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 575 892 A1

### ANNEX TO THE EUROPEAN SEARCH REPORT
### ON EUROPEAN PATENT APPLICATION NO.

EP 24 21 9892

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | | Publication date |
|---|---|---|---|---|
| US 2003045203 A1 | 06-03-2003 | CN | 1338980 A | 06-03-2002 |
| | | KR | 20010101883 A | 15-11-2001 |
| | | US | 2003045203 A1 | 06-03-2003 |
| | | US | 2006041332 A1 | 23-02-2006 |
| | | WO | 0139932 A1 | 07-06-2001 |
| US 2002016128 A1 | 07-02-2002 | CN | 1331445 A | 16-01-2002 |
| | | FR | 2811238 A1 | 11-01-2002 |
| | | GB | 2366216 A | 06-03-2002 |
| | | HK | 1041231 A1 | 05-07-2002 |
| | | JP | 2002018146 A | 22-01-2002 |
| | | NL | 1018452 C2 | 08-01-2002 |
| | | US | 2002016128 A1 | 07-02-2002 |
| JP 2002163631 A | 07-06-2002 | JP | 3854061 B2 | 06-12-2006 |
| | | JP | 2002163631 A | 07-06-2002 |
| US 2022299999 A1 | 22-09-2022 | JP | 7192905 B2 | 20-12-2022 |
| | | JP | 7364016 B2 | 18-10-2023 |
| | | JP | 2022142107 A | 30-09-2022 |
| | | JP | 2023024848 A | 17-02-2023 |
| | | US | 2022299999 A1 | 22-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014069257 A